# EUROPEAN PATENT APPLICATION

(11) **EP 4 554 099 A1**
(43) Date of publication of application: **14.05.2025**
(21) Application number: 24721857.1
(22) Date of filing: 29.04.2024
(51) Int. Cl.: H04B 1/401, H04B 1/50, H04B 7/0413, H04W 88/06, H04B 1/04, H04B 1/00

(54) **ELECTRONIC DEVICE FOR PROCESSING RADIO FREQUENCY AND METHOD FOR OPERATING SAME**

(30) Priority: 26.09.2023 KR 20230129767; 20.11.2023 KR 20230160043
(71) Applicant: Samsung Electronics Co., Ltd., Suwon-si, Gyeonggi-do 16677 (KR)
(72) Inventor: LEE, Seonghyeon, Suwon-si, Gyeonggi-do 16677 (KR); KIM, Sanguk, Suwon-si, Gyeonggi-do 16677 (KR); PARK, Daehee, Suwon-si, Gyeonggi-do 16677 (KR); PARK, Sungchul, Suwon-si, Gyeonggi-do 16677 (KR); YOO, Sungcheol, Suwon-si, Gyeonggi-do 16677 (KR); LEE, Yunbum, Suwon-si, Gyeonggi-do 16677 (KR); LEE, Jeongheum, Suwon-si, Gyeonggi-do 16677 (KR); LEE, Hanyeop, Suwon-si, Gyeonggi-do 16677 (KR); CHO, Woosik, Suwon-si, Gyeonggi-do 16677 (KR); CHOI, Taihwan, Suwon-si, Gyeonggi-do 16677 (KR)
(74) Representative: Nederlandsch Octrooibureau
(86) International application number: PCT/KR2024/005794
(87) International publication number: WO 2025/070920

(57) **Abstract**

An electronic device may include a first circuit and a second circuit. The first circuit may include a processor, and a first transceiver connected to the processor and configured to process a radio frequency (RF) corresponding to a first radio access technology (RAT) and/or a first frequency range (FR1) of a second RAT, and to process an intermediate frequency (IF) corresponding to a third RAT. The second circuit may include a first switching part connected to the first transceiver through a second connection part, and a second transceiver configured to process a RF corresponding to the third RAT and connected to a second antenna array, the first switching part being configured to connect the first transceiver with antenna elements and/or the second transceiver.

## Description

### [Technical Field]

Various embodiments of the disclosure relate to an electronic device for processing a radio frequency and a method of operating the same.

### [Background Art]

With the development of information communication technology and semiconductor technology, the supply and use of various electronic devices are increasing. In particular, recent electronic devices are being developed to communicate while being carried.

Electronic devices may mean home appliances and devices performing a specific function according to an installed program, such as an electronic note, a portable multimedia player, a mobile communication terminal, a tablet PC, a video/sound device, a desktop/laptop computer, or a vehicle navigation device. For example, such electronic devices may output stored information as a sound or an image. As a degree of integration of the electronic device increases and high-capacity wireless communication becomes common, one function may be installed in one electronic device such as a mobile communication terminal. For example, not only a communication function but also an entertainment function such as a game, a multimedia function such as music video reproduction, a communication and security function for mobile banking, and a function such as schedule management or electronic wallet are integrated into one electronic device. The electronic device has become smaller to be conveniently carried by a user.

The information may be provided as the related art to help understanding of the disclosure. Any opinion or decision on whether the above-mentioned content can be applied as the prior art related to the disclosure has been not provided.

### [Detailed Description of the Invention]

### [Technical Problem]

Embodiments of the disclosure may provide a radio frequency (RF) circuit configuration of an electronic device supporting various radio communication technologies.

The technical problem to be solved in the disclosure may not be limited to the above-mentioned technical problem, and other technical problems which are not mentioned may be clearly understood, through the following descriptions, by those skilled in the art of the disclosure.

### [Technical Solution]

An electronic device according to an embodiment of the disclosure may include a first circuit including a processor, and a first transceiver connected to the processor and configured to process a radio frequency (RF) corresponding to a first radio access technology (RAT) and/or a first frequency range (FR1) of a second RAT, and to process an intermediate frequency (IF) corresponding to a third RAT. The electronic device may include a second circuit including a first switching part connected to the first transceiver through a second connection part, and a second transceiver configured to process a RF corresponding to the third RAT and connected to a second antenna array, the first switching part being configured to connect the first transceiver with antenna elements and/or the second transceiver.

A method of operating an electronic device according to an embodiment of the disclosure may include controlling a first transceiver to process radio frequency (RF) signals corresponding to a first radio access technology (RAT) and/or a first frequency range (FR1) of a second RAT in a first communication mode using the first RAT and/or the FR1 of the second RAT, and to process intermediate frequency (IF) signals corresponding to a third RAT in a second communication mode using the third RAT. The method may include controlling a first switching part to connect at least one first antenna element among antenna elements to the first transceiver in the first communication mode and connect the at least one first antenna element to a second transceiver in the second communication mode.

A non-transitory computer-readable storage medium storing one or more programs according to an embodiment of the disclosure is provided. The one or more programs may include instructions that, when executed by at least one processor of an electronic device, cause the electronic device to control a first transceiver to process radio frequency (RF) signals corresponding to a first radio access technology (RAT) and/or a first frequency range (FR1) of a second RAT in a first communication mode using the first RAT and/or the FR1 of the second RAT, and to process intermediate frequency (IF) signals corresponding to a third RAT in a second communication mode using the third RAT, and control a first switching part to connect at least one first antenna element among antenna elements to the first transceiver in the first communication mode and connect the at least one first antenna element to a second transceiver in the second communication mode.

### [Brief Description of Drawings]

FIG. 1 is a block diagram of an electronic device 101 within a network environment 100 according to an embodiment.
FIG. 2 is a diagram illustrating an example of the structure of the electronic device according to an embodiment of the disclosure.
FIG. 3 is a diagram illustrating arrangement of circuits of the electronic device according to an embodiment of the disclosure.
FIG. 4 is a diagram illustrating an example of the structure of circuits of the electronic device supporting the 6G according to an embodiment of the disclosure.
FIG. 5 illustrates the structure of circuits of the electronic device using RF hardware according to an embodiment of the disclosure.
FIG. 6 is a diagram illustrating an example of the structure of circuits of the electronic device supporting the 6G using RF hardware according to an embodiment of the disclosure.
FIG. 7 is a diagram illustrating a 6G signal transmission path according to an embodiment of the disclosure.
FIG. 8 is a diagram illustrating a 6G signal reception path according to an embodiment of the disclosure.
FIG. 9 is a diagram illustrating the structure of a transceiver according to an embodiment of the disclosure.

### [Mode for Carrying out the Invention]

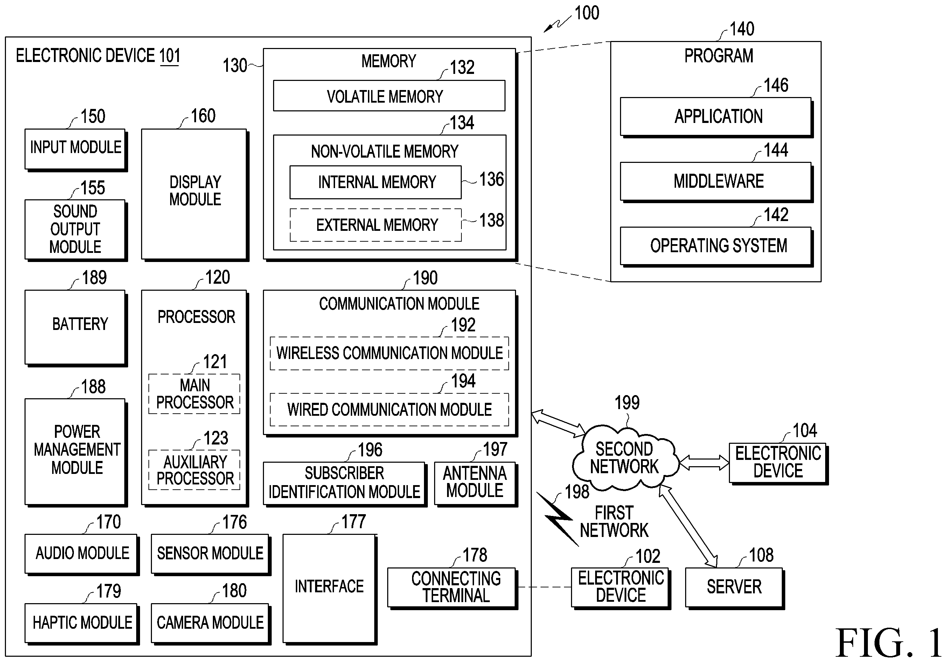

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In an embodiment, an electronic device (for example, the electronic device 101) may use a communication service through a mobile communication system. A radio access technology (RAT) of the mobile communication system has developed from a legacy communication technology (for example, at least one of 2^{nd} generation (2G), 3^{rd} generation (3G), or 4^{th} generation (4G)) to a 5G communication technology (for example, new radio (NR)). The 5G (for example, NR) may use at least one of a first frequency rand (frequency range 1: FR1) lower than 7 GHz (for example, referred to as sub-6 GHz) and/or a second frequency range (FR2) higher than 24 GHz (for example, millimeter wave (mmWave) spectrum). RF characteristics of the first frequency range may be similar to RF characteristics of frequency bands of the legacy communication technology (hereinafter simply referred to as legacy).

[Table 1] below shows an example of RF characteristics that can be used in the frequency bands of the legacy and/or the first frequency range of NR (hereinafter referred to as Legacy/FR1) and the second frequency range of NR (hereinafter referred to as FR2).

**[Table 1]**

| Item | Legacy/FR1 | FR2 |
|---|---|---|
| Frequency range | ~ about 7 GHz | About 24 GHz ~ |
| antenna | Based on element | Based on array |
| RF circuit configuration | Only RFIC | IFIC + RFIC |
| RFIC location | Main board | Near antenna |
| Number of antennas | 2 to 4 | Maximum of 10 per array module |

As shown in [Table 1] above, RF characteristics of the legacy and/or the first frequency range may be very different from RF characteristics of the second frequency range. The electronic device (for example, the electronic device 101) may include an RF circuit (for example, an RF integrated circuit (RFIC)) configured to process the legacy and/or the first frequency range and an RF circuit configured to process the second frequency range, respectively.

In an embodiment, an example of the difference between the legacy and/or the first frequency range, and the second frequency range is described below.

### 1. Number of antennas

The second frequency range needs a physical antenna with a smaller size compared to a physical antenna for the legacy and/or the first frequency range, and has a characteristic of a larger path loss (PL) in a channel environment than a path loss of the legacy and/or first frequency ranges. The electronic device (for example, the electronic device 101) may need a larger number of antennas to process the legacy and/or the first frequency range compared to antennas for the second frequency range. Accordingly, the wireless communication module 192 of the electronic device 101 may further need an antenna mounting space for the second frequency range and RF wiring to apply an RF signal to antennas in the antenna mounting space, in addition to an antenna mounting space and RF wiring for the legacy and/or the first frequency range.

### 2. Insertion loss (IL)

Since the second frequency range includes an RF band higher than the legacy and/or the first frequency range, the insertion loss in RF wiring for the second frequency range may be larger than an insertion loss of the legacy and/or the first frequency range. The electronic device 101 may use intermediate frequency conversion based on an intermediate frequency (IF) (For example, 10 GHz) in order to process an RF signal higher than 24 GHz included in the second frequency range. In an embodiment, the wireless communication module 192 of the electronic device 101 may include, for example, both an IF integrated circuit (IFIC) configured to process an intermediate frequency band (for example, 10 GHz) corresponding to the RF signal in the second frequency range and an RFIC configured to process the RF signal in the second frequency range, and the RFIC may be configured to be physically very close to the antenna for the second frequency range.

A 6^{th} generation (6G) communication technology after the 5G (for example, NR) may use, for example, a frequency band of 10 to 15 GHz (for example, a centimeter wave (cmWave) spectrum). The cmWave is a frequency band between the first frequency range and the second frequency range, and may include RF characteristics of both the first frequency range and the second frequency range. Embodiments of the disclosure may provide not only the legacy communication technology (for example, at least one of the 2G, the 3G, or the 4G) and the 5G communication technology but also an RF circuit structure (for example, the wireless communication module 192) for an electronic device (for example, the electronic device 101) which can support the 6G communication technology.

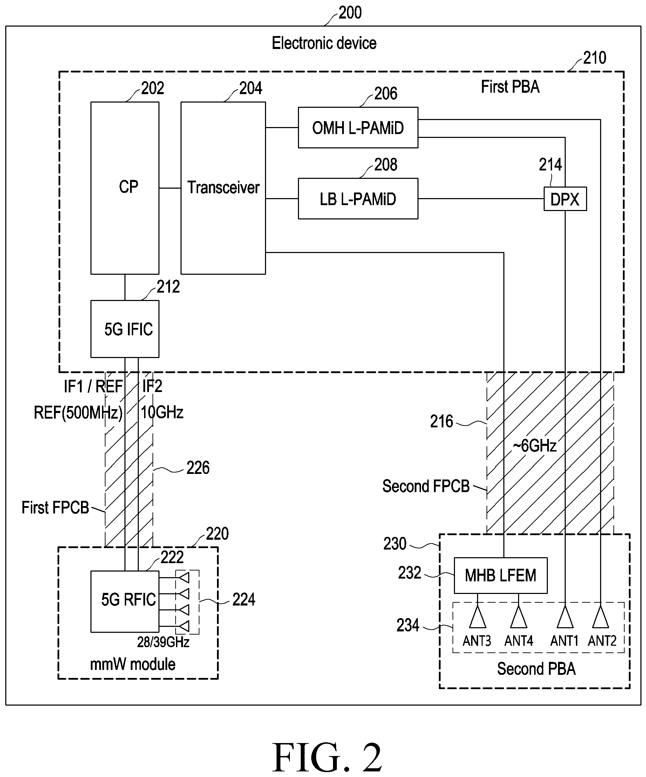

FIG. 2 is a diagram illustrating an example of the structure of the electronic device according to an embodiment of the disclosure.

Referring to FIG. 2, an electronic device 200 (for example, the electronic device 101) may include a first printed board assembly (PBA) 210, a millimeter wave (mmW) module 220 connected to the first PBA 210 through a first flexible printed circuit board (FPCB) 226, and a second PBA 230 connected to the first PBA 210 through a second FPCB 216.

In an embodiment, the first PBA 210 may include a communication processor (CP) 202, a transceiver 204, at least one amplifier (for example, one middle and high bands' frequency (OMH) low noise amplifier (LNA) power amplifier module with integrated duplexer (L-PAMiD) and a low bands' frequency (LB) L-PAMiD 208), a diplexer (DPX) 214, and a 5G IFIC 212. The diplexer (DPX) 214 may be connected at least one of one or more lines between the OMH L-PAMiD 206 and the LB L-PAMiD 208, and the second FPCB 216.

The communication processor (CP_ 202 may determine that the electronic device 200 will operate in at least one communication mode among a legacy communication mode, a 5G FR1 communication mode, a 5G FR2 communication mode, or a 6G communication mode, and generate and output a baseband signal for communication using the determined communication mode or analyze an input baseband signal. In an embodiment, the baseband signal may include encoded and modulated symbols according to the determined communication mode.

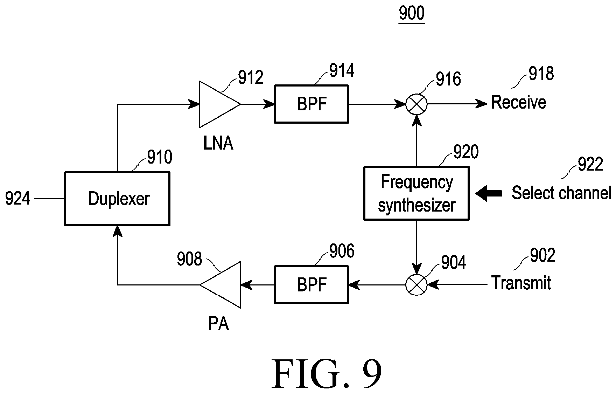

The transceiver 204 may be configured to process RF signals in the frequency range of the legacy communication technology and the first frequency range (for example, lower than 6 GHz). Although not illustrated, in an embodiment, the transceiver 204 may include at least one of at least one mixer, at least amplifier (AMP), at least one attenuator, or at least one filter (for example, a band pass filter (BPF)) in order to generate or process RF signals in a predetermined frequency band. In an embodiment, the transceiver 204 may include a transceiver 900 of FIG. 9, but is not limited thereto.

In an embodiment, the transceiver 204 may receive a baseband signal generated by the communication processor 202 and perform frequency up conversion of the baseband signal into an RF signal in a predetermined frequency band (for example, a transmission frequency band lower than 6 GHz) within the frequency range of the legacy communication technology or the first frequency range by using a predetermined reference frequency (for example, a local oscillator (LO) frequency). The RF signal may be transferred to the second PBA 230 through the second FPCB 216 via at least one of the OMH L-PAMiD 206 and/or the LB L-PAMiD 208 or transferred to the second PBA 230 from the transceiver 204 through the second FPCB 216 without passing through the amplifier.

In an embodiment, the transceiver 204 may receive an RF signal in a predetermined frequency band (for example, a reception frequency band lower than 6 GHz) within the frequency range of the legacy communication technology or the first frequency range from the second PBA 230 and perform frequency down conversion of the RF signal into a baseband signal by using a predetermined reference frequency (for example, an LO frequency). The RF signal may be received by the first PBA 210 from the second PBA 230 through the first PBA 210 and then transferred to the transceiver 204 via at least one of the OMH L-PAMiD 206 and/or the LB L-PAMiD 208 or may be received by the first PBA 210 from the second PBA 230 through the second FPCB 216 and then transferred to the transceiver 204 without passing through the amplifier. The baseband signal output from the transceiver 204 may be transferred to the communication processor 202.

In an embodiment, the OMH L-PAMiD 206 and/or the LB L-PAMiD 208 are elements for processing RF signals between the antenna (for example, antenna elements 234) and the transceiver 204 and may include, for example, at least one of a switch module, an antenna switch module (ASM), one or more filters (for example, a band pass filter (BPF), a duplexing filter), or a triplexing filter)), a power amplifier (PA), a low noise amplifier, or a coupler.

In an embodiment, the LB L-PAMiD 208 may be configured to process RF signals in a frequency band lower than 1 GHz within the frequency range of the legacy communication technology or the first frequency. In an embodiment, the OMH L-PAMiD 206 may be configured to process RF signals in a middle frequency band (for example, 1.4 GHz to 2.2 GHz) and/or a high frequency band (for example, 2.3 GHz to 2.7 GHz) within the frequency range of the legacy communication technology or the first frequency range. In an embodiment, the OMH L-PAMiD 206 may include a middle and high bands' frequency (MHB) L-PAMiD. In an embodiment, the OMH L-PAMiD 206 may handle a main path which is standalone (SA) of the 2G, the 3G, and the 4G and is 4G aggregated.

In an embodiment, the 5G IFIC 212 may be configured to process middle frequency conversion for the RF signal in the second frequency range (for example, lower than 24 GHz). Although not illustrated, in an embodiment, the 5G IFIC 212 may include at least one of at least one mixer, at least one amplifier, at least one attenuator, or at least one filter in order to generate or process IF signals in a predetermined frequency band. In an embodiment, the 5G IFIC 204 may include a transceiver 900 of FIG. 9, but is not limited thereto.

In an embodiment, the 5G IFIC 212 may receive a baseband signal generated by the communication processor 202 and perform frequency up conversion of the baseband signal into an IF signal in a middle frequency band (for example, IF1 (=500 MHz) or IF2 (=10 GHz)) corresponding to the second frequency range by using a reference frequency signal of a predetermined reference frequency (for example, 500 MHz). The IF signal may be transferred to the mmW module 220 through one or more lines within the first FPCB 226. The first FPCB 226 may include a first line that transmits an IF signal (for example, IF1) and/or a reference frequency signal (for example, REF) and/or a second line that transmits an IF signal (for example, IF2).

In an embodiment, the 5G IFIC 212may receive an IF signal in a middle frequency band (for example, IF1 (=500 MHz) or IF2 (=10 GHz) corresponding to the second frequency range from the mmW module 220 through the first FPCB 226 and perform frequency down conversion of the IF signal (for example, IF2) into a baseband signal by using a predetermined reference frequency (for example, 500 MHz). The IF signal may be transferred to the 5G IFIC 212 of the first PBA 210 from the mmW module 220 through one or more lines within the first FPCB 226. The baseband signal output from the 5G IFIC 212 may be transferred to the communication processor 202. The signal output from the 5G IFIC 212 may be demodulated and decoded by the communication processor 202 after transferred to the communication processor 202.

The mmW module 220 may include the 5G RFIC 222 configured to process RF signals in the second frequency range. Although not illustrated, in an embodiment, the 5G RFIC 222 may include at least one of at least one mixer, at least one amplifier, at least one attenuator, or at least one filter in order to generate or process RF signals in a predetermined frequency band. In an embodiment, the 5G RFIC 222 may include the transceiver 900 of FIG. 9, but is not limited thereto.

In an embodiment, the 5G RFIC 222 may be configured to receive an IF signal in a middle frequency band (for example, IF1 (=500 MHz) or IF2 (=10 GHz)) corresponding to the second frequency band from the 5G IFIC 212 of the first PBA 210 through the first FPCB 226 and perform frequency up conversion of the IF signal into an RF signal in a predetermined frequency band (for example, a transmission frequency band higher than 24 GHz, for example, 28 GHz to 39 GHz) within the second frequency range. The 5G RFIC 222 may radiate the RF signal to the air through the antenna array 224 including one or more antenna elements. In an embodiment, the 5G RFIC 222 may receive an RF signal in a predetermined frequency band (for example, a reception frequency band higher than 24 GHz, for example, 28 GHz to 39 GHz) within the second frequency range through the antenna array 224 and perform frequency down conversion of the RF signal into an IF signal in a middle frequency band (for example, IF1 (=500 MHz) or IF2 (=10 GHz)) corresponding to the second frequency range. The IF signal may be transferred to the 5G IFIC 212 of the first PBA 210 through the first FPCB 226.

The second PBA 230 may receive an RF signal (for example, lower than 6 GHz) in a predetermined transmission frequency band within the frequency range of the legacy communication technology or the first frequency range from the first PBA 210 through the second FPCB 216. In an embodiment, the second PBA 230 may include a middle and high bands' frequency (MHB) LNA front-end module (LFEM) 232 and one or more antenna elements 234. In an embodiment, the antenna elements 234 may include two antenna elements (for example, antenna 1 (ANT1) and antenna 2 (ANT2)) used for both transmission and reception and two antenna elements (for example, antenna 3 (ANT3) and antenna 4 (ANT4) used for only reception.

In an embodiment, the second FPCB 216 connecting the first PBA 210 and the second PBA 230 may include at least one of a first line that connects an RF signal (for example, 1.4 GHz to 2.7 GHz) from the OMH L-PAMiD 206 to antenna 2, a second line that connects an RF signal (for example, lower than 2.7 GHz) from the OMH L-PAMiD 206 or the LB L-PAMiD 208 to antenna 1 through the DPX 214, or a third line that connects an RF signal (for example, lower than 6 GHz) from the transceiver 204 to the MHB LFEM 232.

The second PBA 230 may radiate, to the air, an RF signal in a predetermined frequency band (for example, a transmission frequency band lower than 6 GHz) within the frequency range of the legacy communication technology or the first frequency range transmitted from the OMH L-PAMiD 206 or the LB L-PAMiD 208 of the first PBA 210 through the second FPCB 216 through antenna 1 and/or antenna 2 in the antenna elements 234. The second PBA 230 may transfer an RF signal in a predetermined frequency band (for example, a reception frequency band lower than 6 GHz) within the frequency range of the legacy communication technology or the first frequency range received by antenna 1 and/or antenna 2 in the antenna elements 234 to the OMH L-PAMiD 206 or the LB L-PAMiD 208 of the first PBA 210 through the second FPCB 216.

Before transferring an RF signal in a predetermined frequency band (for example, a reception frequency band lower than 6 GHz) within the frequency range of the legacy communication technology or the first frequency range received by antenna 3 and/or antenna 4 in the antenna elements 234 to the transceiver 204 of the first PBA 210 through the second FPCB 216, the MHB LFEM 232 may amplify and filter the RF signal. In an embodiment, the MHB LFEM 232 may include at least one of an LNA, a surface acoustic wave (SAW) filter, or an (antenna) switch module without any amplifier (PA) or coupler. In an embodiment, the RF signal output from the MHB LFEM 232 may be transferred to the transceiver 204 without passing through an amplifier (for example, the OMH L-PAMiD 206 or the LB L-PAMiD 208) after transferred to the first PBA 210 via the second FPCB 216.

As illustrated in FIG. 2, RF signals of the legacy and the first frequency range may share the same RF wiring (for example, the transceiver 204, the OMH L-PAMiD 206, the LB L-PAMiD 208, the diplexer 214, the second FPCB 216, and the second PBA 230), and RF signal of the second frequency range may exclusively use the 5G IFIC 212, the first FPCB 226, and the mmW module 220.

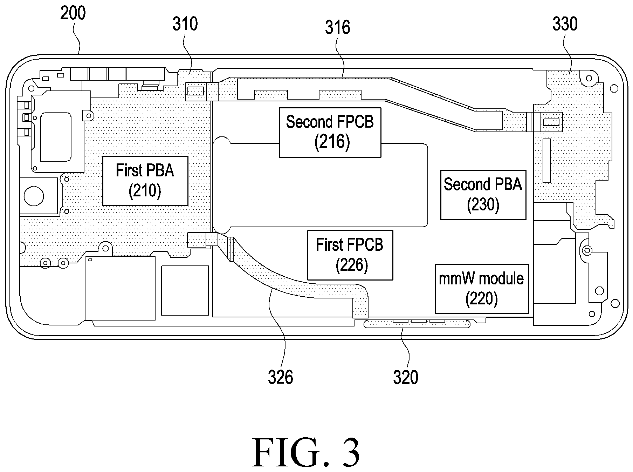

FIG. 3 is a diagram illustrating arrangement of circuits of the electronic device according to an embodiment of the disclosure.

Referring to FIG. 3, the electronic device 200 (for example, the electronic device 101) may include a first PBA area 310 including the first PBA 210, a second PBA area 330 including the second PBA 230, and an mmW module area 320 including the mmW module 220. In an embodiment, the first PBA area 310 may be located in a first area on a back surface of the electronic device 200, the second PBA area 330 may be located in a second area on the back surface of the electronic device 200, and the mmW module 220 may be located on the side surface of the electronic device 200. A first FPCB area 326 including the first FPCB 226 may be located between the first PBA area 310 and the mmW module area 320, and a second FPCB area 316 including the second FPCB 216 may be located between the first PBA area 310 and the second PBA area 330.

[Table 2] below shows an example of RF characteristics of the legacy and/or the first frequency range (i.e., Legacy/FR1), the second frequency range (i.e., FR2), and a frequency band of the 6G communication technology (i.e., 6G).

**[Table 2]**

| Item | Legacy/FR1 | 6G | FR2 |
|---|---|---|---|
| Frequency range | - about 7 GHz | About 10 to about 15 GHz | About 24 GHz ~ |
| antenna | Based on element | Element/array | Based on array |
| RF circuit configuration | Only RFIC | IFIC + RFIC | |
| RFIC location | Main board | Near antenna | |
| Number of antennas | 2 to 4 | Maximum of 8 per array module | Maximum of 10 per array module |

Referring to [Table 2], the 6G communication technology has higher IL and higher pass loss in a channel like FR2 compared to other communication technologies (for example, legacy/FR1 or FR2), and thus the RFIC for the 6G should be configured to be adjacent to the antenna and may need a plurality of antenna elements.

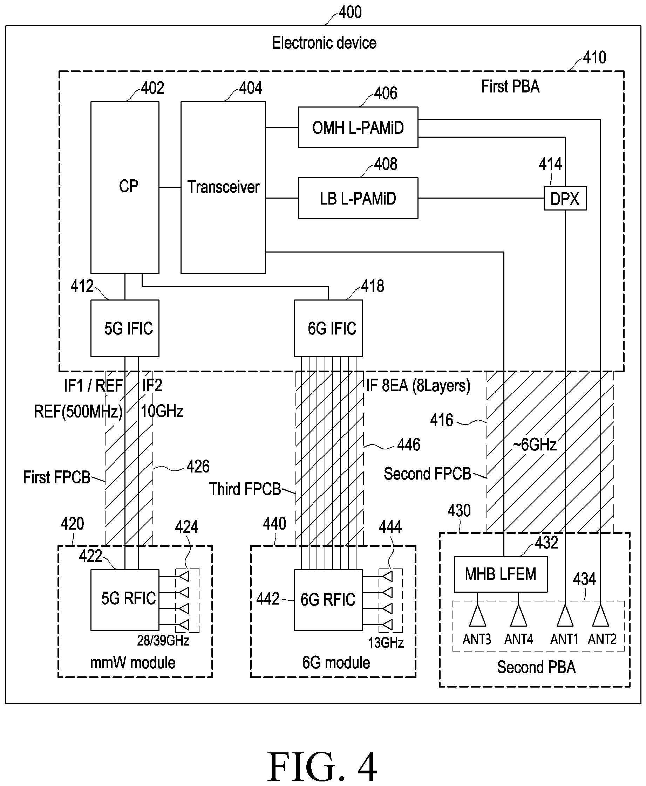

FIG. 4 is a diagram illustrating an example of the structure of circuits of the electronic device supporting the 6G according to an embodiment of the disclosure.

Referring to FIG. 4, an electronic device 400 (for example, the electronic device 101) may include a first PBA 410, an mmW module 420 connected with the first PBA 410 through a first FPCB 426, a second PBA 430 connected with the first PBA 410 through a second FPCB 416, and a 6G module 440 connected with the first PBA 410 through a third FPC 446.

In an embodiment, the first PBA 410 may include a communication processor 402, a transceiver 404, an OMH L-PAMiD 406, an LB L-PAMiD 408, a diplexer (DPX) 404, a 5G IFIC 412, and a 6G IFIC 418. The communication processor 402, the transceiver 404, the OMH L-PAMiD 406, the LB L-PAMiD 408, the diplexer (DPX) 414, and the 5G IFIC 412 may be similar to the communication processor 202, the transceiver 204, the OMH L-PAMiD 206, the LB L-PAMiD 208, the diplexer (DPX) 214, and the 5G IFIC 212 of FIG. 2.

The mmW module 420 may include the 5G RFIC 422 configured to process RF signals in the second frequency range. In an embodiment, the 5G RFIC 422 may be configured to receive an IF signal in a middle frequency band (for example, IF1 (=500 MHz) or IF2 (=10 GHz)) corresponding to the second frequency band from the 5G IFIC 410 through the first FPCB 426 and perform frequency up conversion of the IF signal into an RF signal in a predetermined frequency band (for example, a transmission frequency band higher than 24 GHz, for example, 28 GHz to 39 GHz) within the second frequency range. The 5G RFIC 422 may radiate the RF signal to the air through the antenna array 424 including one or more antenna elements. In an embodiment, the 5G RFIC 422 may receive an RF signal in a predetermined frequency band (for example, a reception frequency band higher than 24 GHz, for example, 28 GHz to 39 GHz) within the second frequency range through the antenna array 424 and perform frequency down conversion of the RF signal into an IF signal in a middle frequency band (for example, IF1 (=500 MHz) or IF2 (=10 GHz)) corresponding to the second frequency range. The IF signal may be transferred to the 5G IFIC 412 of the first PBA 410 through the first FPCB 426.

The second PBA 430 may receive an RF signal (for example, lower than 6 GHz) in a frequency range of the legacy communication technology or a predetermined transmission frequency band within the first frequency range from the first PBA 410 through the second FPCB 416. In an embodiment, the second PBA 430 may include an MHB LFEM 432 and one or more antenna elements 434. In an embodiment, the antenna elements 434 may include two antenna elements (for example, antenna 1 and antenna 2) used for both transmission and reception and two antenna elements (for example, antenna 3 and antenna 4) used for only reception. The MHB LFEM 432 and the antenna elements 434 may be similar to the MHB LFEM 232 and the antenna elements 234 of FIG. 2.

In an embodiment, the 6G IFIC 418 may be configured to process middle frequency conversion for an RF signal in a 6G frequency range (for example, 10 GHz to 24 GHz). Although not illustrated, in an embodiment, the 6G IFIC 418 may include at least one of at least one mixer, at least one amplifier, at least one attenuator, or at least one filter in order to generate or process IF signals in a predetermined frequency band. In an embodiment, the 6G IFIC 418 may include the transceiver 900 of FIG. 9, but is not limited thereto.

In an embodiment, the 6G IFIC 412 may receive baseband signals generated by the communication processor 202 and perform frequency up conversion of the baseband signals into IF signals in a middle frequency band corresponding to the 6G frequency range by using a predetermined reference frequency. The IF signals may be transferred to the 6G module 440 through a plurality of lines within the third FPCB 446. In an embodiment, the 6G IFIC 418 may receive an IF signal in a middle frequency band corresponding to the 6G frequency range from the 6G module 440 through the third FPCB 446 and perform frequency down conversion of the IF signal into a baseband signal by using a predetermined reference frequency. The IF signal may be transferred from the 6G module 440 to the 6G IFIC 418 of the first PBA 410 through a plurality of lines within the third FPCB 446. The baseband signal output from the 6G IFIC 418 may be transferred to the communication processor 402.

The 6G module 440 may include a 6G RFIC 442 configured to process RF signals in the 6G frequency range. In an embodiment, the 6G RFIC 442 may be configured to receive an IF signal in a middle frequency band corresponding to the 6G frequency range from the 6G IFIC 418 of the first PBA 410 through the third FPCB 446 and perform frequency up conversion of the IF signal into an RF signal in a predetermined frequency band (for example, a transmission frequency band within 10 GHz to 15 GHz, for example, 13 GHz) within the 6G frequency range. The 6G RFIC 442 may radiate the RF signal to the air through the antenna array 444 including one or more antenna elements. In an embodiment, the 6G RFIC 442 may receive an RF signal in a predetermined frequency band (for example, a reception frequency band within 10 GHz to 15 GHz, for example, 13 GHz) within the 6G frequency range through the antenna array 444 and perform frequency down conversion of the RF signal into an IF signal in a middle frequency band corresponding to the 6G frequency range. The IF signal may be transferred to the 6G IFIC 418 of the first PBA 410 through the third FPCB 446.

The third FPCB 446 may include a plurality of lines (for example, 8 lines for supporting a maximum of 8 layers) that transfers IF signals from the 6G IFIC 418 to the 6G RFIC 442 within the 6G module 440.

In the circuit structure of FIG. 4, RF signals of the legacy and the first frequency range may share the same RF circuit configuration (for example, at least one of the transceiver 204, the OMH L-PAMiD 206, the LB L-PAMiD 208, the diplexer 214, the second FPCB 216, and the second PBA 230), and RF signals in the second frequency range may use the dedicated circuit configuration (for example, at least one of the 5G IFIC 212, the first FPCB 226, or the mmW module 220).

The RF circuit configuration for 6G communication may include middle frequency conversion. Since a cmWave band generates very large insertion loss, it may be appropriated that the IFIC for 6G communication (for example, the 6G IFIC 418) is mounted to a main board (for example, the first PBA 410) and the RFIC for 6G communication (for example, the 6G RFIC 442) is mounted near the antenna (for example, the antenna array 444). The 6G communication system may support multi-layer (for example, 8 layer) multiple input multiple output (MIMO) in order to transmit and receive data at a high data rate. In order to support multi-layer MIMO, 8 or more RF wiring (for example, the third FPCB) may be connected between the IFIC (for example, the 6G IFIC 418) and the RFIC (for example, the 6G RFIC 442).

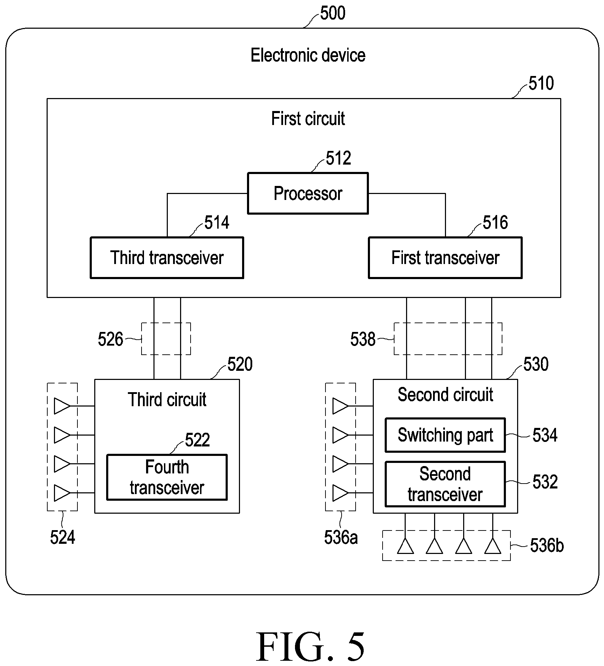

FIG. 5 illustrates the structure of circuits of the electronic device using RF hardware according to an embodiment of the disclosure. The electronic device of FIG. 5 may, for example, be considered as a specific embodiment of the electronic device described with reference to FIGs. 1-3. At least one of the elements described below according to embodiments may be omitted, transformed, or connected in a different form.

Referring to FIG. 5, an electronic device 500 (for example, the electronic device 101 or 200) may include a first circuit 510 (for example, a first PBA 210 or 610), a third circuit 520 (for example, an mmW module 220 or 620), and a second circuit 530 (for example, a second PBA 230 or 630).

In an embodiment, the first circuit 510 may include a processor 512 (for example, a CP 202 or 602), a first transceiver 516 (for example, a transceiver 204 or 604), and a third transceiver 514 (for example, a 5G IFIC 212 or 612). The processor 512 may generate a baseband communication signal for communication using at least one of a first radio access technology (RAT) (for example, the legacy communication technology), a second RAT (for example, 5G or NR), or a third RAT (for example, 6G) according to a predetermined communication mode (for example, at least one of a legacy communication mode, a 5G FR1 communication mode, a 5G FR2 communication mode, or a 6G communication mode) and analyze a baseband signal output from the first transceiver 516 or the third transceiver 514 or input from the first transceiver 516 or the third transceiver 514.

In an embodiment, the first transceiver 516 may be configured to process an RF (for example, lower than 6 GHz) corresponding to a first frequency range of the first RAT or the second RAT in a first communication mode (for example, the legacy communication mode) or a second communication mode (for example, the 5G FR1 communication mode) or process an IF (for example, 600 MHz to 6 GHz) corresponding to the third RAT (for example, 6G) in a fourth communication mode (for example, the 6G communication mode). The third transceiver 514 may be configured to process an IF (for example, 10 GHz) corresponding to the second frequency range of the second RAT in a third communication mode (for example, the 5G FR2 communication mode).

In an embodiment, the first circuit 510 may further include at least one amplifier (for example, at least one of the OMH L-PAMiD 606 or the LB L-PAMiD 608) for amplifying signals output or input from the first transceiver 516. In an embodiment, the at least one amplifier may be connected to the second circuit 530 through a diplexer (for example, the DPX 614).

In an embodiment, the third circuit 520 may be connected to the first circuit 510 through a first connection part 526 (for example, the FPCB), and may include a fourth transceiver 522 (for example, the 5G RFIC 622) and a first antenna array 524 (for example, the first antenna array 624). The fourth transceiver 522 may be configured to process an RF (for example, 28 GHz to 39 GHz) corresponding to the second frequency range of the second RAT. The first antenna array 524 may be configured to receive or transmit RF signals corresponding to the second frequency of the second RAT. Similar to the first FPCB 226 of FIG. 2, the first FPCB 526 may include a first line that transmits an IF signal (for example, IF1) corresponding to FR2 of the second RAT and/or a reference frequency signal (for example, an REF) and/or a second line that transmits an IF signal (for example, IF2).

In an embodiment, similar to the second FPCB 226 of FIG. 2, the second connection part 538 (for example, the FPCB) may include a first line that transmits an IF signal (for example, IF1) corresponding to the second frequency range of the second RAT and/or a reference frequency signal (for example, the REF) and/or a second line that transmits an IF signal (for example, IF2). In an embodiment, similar to the second FPCB 216 of FIG. 2, the second FPCB 538 may include one or more lines that connect the first transceiver 516 to the second circuit 530.

In an embodiment, the second circuit 530 may be connected to the first circuit 510 through the second FPCB 538, and a second transceiver 532 (for example, the 6G RFIC 632), a switching part 534 (for example, switches 636a, 636b, 636c, 638a, and 638b), one or more antenna elements 536a (for example, antenna elements 634a), and a second antenna array 536b (for example, a second antenna array 632a).

In the first communication mode (for example, the legacy communication mode) or the second communication mode (for example, the 5G FR1 communication mode), the switching part 534 may transfer, to the antenna elements 536a, RF signals corresponding to the frequency range of the first RAT or the first frequency range of the second RAT transmitted from the first transceiver 516 through the second FPCB 538 or transfer RF signals received through the antenna elements 536a to the first transceiver 516. In the fourth communication mode, the switching part 534 may transfer, to the second transceiver 532, IF signals corresponding to the third RAT transmitted from the first transceiver 516 through the second FPCB 538 and transfer IF signals output from the second transceiver 532 to the first transceiver 516.

The second transceiver 532 may be configured to process an RF (for example, 13 GHz) corresponding to the third RAT (for example, the 6G) in the fourth communication mode. The second antenna array 536b may be configured to receive or transmit RF signals corresponding to the third RAT.

The cmWave 6G communication system has both of characteristics of the mmWave and characteristics of the legacy/first frequency band. As an example, since the 6G communication system needs the number of antennas (for example, the second antenna array 536b) larger than the number of antennas in the legacy/first frequency band and has large insertion loss (IL) of the RF band, it may be possible to reduce insertion loss of the RF band by mounting the RFIC for the 6G (for example, the second transceiver 532) to be close to the antennas (for example, the second antenna array 536b).

The first transceiver 516 configured to support the legacy/first frequency band may be configured to provide RF signals in a bands of 600 MHz to 6 GHz in the first communication mode or the second communication mode. The 6G communication system uses a band of 10 GHz, unlike the mmWave, and thus may use an IF band and an RF band lower than the mmWave. Accordingly, for the 6G communication, the first transceiver 516 may process IF signal in 600 MHz to 6 GHz and reference frequency signals (for example, REF CLK). Through the structure illustrated in FIG. 5, it is possible to reduce a design space and power consumption by not using the IFIC (for example, the 6G IFIC 418) and RF wiring (for example, the third FPCB 446).

The antenna elements 536a of the second circuit 530 may be used to transmit or receive RF signals corresponding to the frequency range of the first RAT or the first frequency range of the second RAT and may be configured to transmit or receive RF signals corresponding to the third RAT. The second circuit 530 may convert at least some of the IF signals corresponding to the third RAT transmitted from the first transceiver 516 into RF signals corresponding to the third RAT by the second transceiver 532 and then radiate the RF signals to the air through the antenna elements 536a. Similar to this, the second circuit 530 may receive the RF signals corresponding to the third RAT through the antenna elements 536a, convert the received RF signals into IF signals corresponding to the third RAT by the second transceiver 532, and then transfer the IF signals to the first transceiver 516 of the first circuit 510.

The switching part 534 of the second circuit 530 may include at least one switch (for example, double pole, double throw (DPDT) or single pole, double throw (SPDT)) controlled to connect the first transceiver 516 to the antenna elements 536a in the first communication mode or the second communication mode and connect the first transceiver 516 to the second antenna array 536b or the antenna elements 536a in the fourth communication mode.

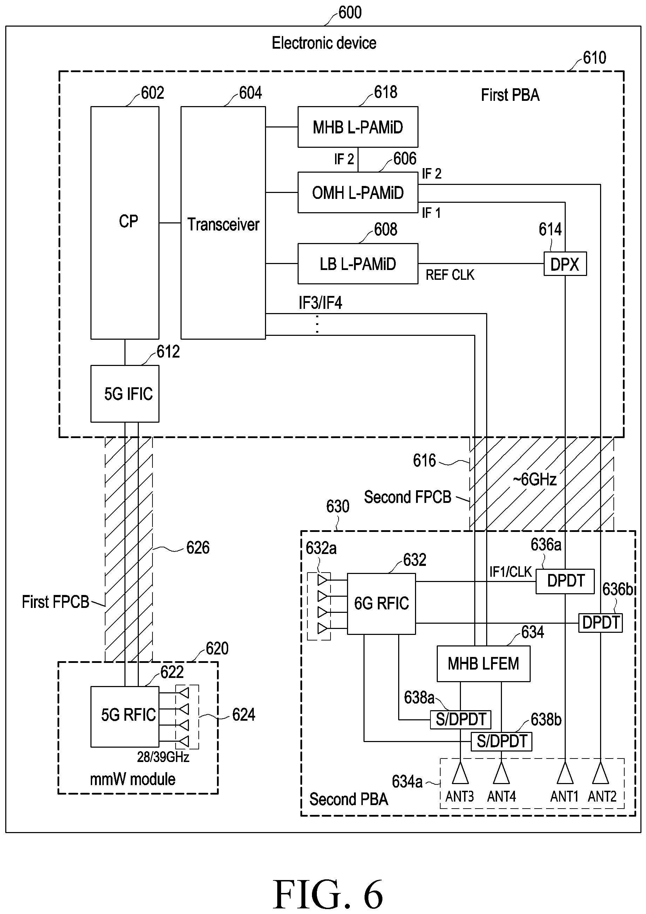

FIG. 6 is a diagram illustrating an example of the structure of circuits of the electronic device supporting the 6G using RF hardware according to an embodiment of the disclosure. The electronic device of FIG. 6 may, for example, be considered as a specific embodiment of the electronic device described with reference to FIG. 5. At least one of the elements described below according to embodiments may be omitted, transformed, or connected in a different form.

Referring to FIG. 6, an electronic device 600 (for example, the electronic device 101) may include a first PBA 610 (for example, the first circuit 510), an mmW module 620 (For example, the third circuit 520) connected to the first PBA 610 through a first FPCB 626, and the second PBA 230 (for example, the second circuit 530) connected to the first PBA 610 through a second FPCB 616.

In an embodiment, the first PBA 210 may include a communication processor (CP) 602 (for example, the processor 512), a transceiver 604 (for example, the first transceiver 516), at least one amplifier (for example, at least one of an OMH L-PAMiD 606, an LB L-PAMiD 608, and an MHB L-PAMiD 618), a diplexer (DPX) 614, and a 5G IFIC 612 (for example, the third transceiver 514). The diplexer (DPX) 614 may be connected at least one of one or more lines between the OMH L-PAMiD 606 and the LB L-PAMiD 608, and the second FPCB 616.

The communication processor (CP) 602 may determine that the electronic device 600 will operate in at least one of a legacy communication mode, a 5G FR1 communication mode, a 5G FR2 communication mode, or a 6G communication mode, and generate and output a baseband signal for communicating using the determined communication mode or analyze an input baseband signal according to the determined communication mode. In an embodiment, the baseband signal may include encoded and modulated symbols according to the determined communication mode.

The transceiver 604 may be configured to process RF signals in the frequency range of the legacy communication technology and the first frequency range (for example, lower than 6 GHz) and IF signals in the 6G communication mode. In an embodiment, the transceiver 604 may include the transceiver 900 of FIG. 9, but is not limited thereto.

In an embodiment, the transceiver 604 may be configured to receive a baseband signal generated by the communication processor 602 and perform frequency up conversion of the baseband signal into an RF signal in the frequency range of the legacy communication technology or a predetermined frequency band (for example, a transmission frequency band lower than 6 GHz) within the first frequency range or an IF signal (for example, 6G IF1 and/or 6G IF2) corresponding to the 6G frequency range by using a predetermined reference frequency (for example, a local oscillator (LO) frequency). In an embodiment, the IF signal corresponding to the 6G frequency range may have a frequency band of 600 MHz to 6 GHz that is similar to the frequency range of the legacy communication technology or the first frequency range.

In an embodiment, the transceiver 604 may include the MHB L-PAMiD 618 (for example, referred to as an ENDC L-PAMiD) for supporting E-UTRAN new radio - dual connectivity (ENDC). The MHB L-PAMiD 618 may be used together with the OMH L-PAMiD 606 in order to simultaneously use a 6G IF1 signal and a 6G IF2 signal in a non-standalone (NAS) situation in which 5G communication and 6G communication are simultaneously performed.

The RF signal or the IF signal may be transferred to the second PBA 630 through the second FPCB 616 via at least one of the OMH L-PAMiD 606 and/or the LB L-PAMiD 608 or transferred to the second PBA 630 from the transceiver 604 through the second FPCB 616 without passing through the amplifier.

In an embodiment, the transceiver 604 may be configured to receive an RF signal in a predetermined frequency band (for example, a reception frequency band lower than 6 GHz) in the frequency band of the legacy communication technology or the first frequency range or an IF signal corresponding to the 6G frequency range from the second PBA 630 and perform frequency down conversion of the RF signal or the IF signal into a baseband signal by using a predetermined reference frequency (for example, an LO frequency).

The RF signal or the IF signal may be received by the first PBA 610 from the second PBA 630 through the second FPCB 616 and then transferred to the transceiver 604 via at least one of the MHB L-PAMiD 618, the OMH L-PAMiD 606, or the LB L-PAMiD 608 or may be received by the first PBA 610 from the second PBA 230 through the second FPCB 216 and then transferred to the transceiver 604 without passing through the amplifier. The baseband signal output from the transceiver 604 may be transferred to the communication processor 602. The baseband signal output from the transceiver 604 may be demodulated and decoded by the communication processor 602 after transferred to the communication processor 602.

In an embodiment, the MHB L-PAMiD 618, the OMH L-PAMiD 606, and/or the LB L-PAMiD 608 are elements for processing RF signals or IF signals between the antenna (for example, the antenna elements 634a and/or the second antenna array 632a) and the transceiver 604 and may include at least one of, for example, a switch module, an antenna switch module (ASM), one or more filters (for example, at least one of a band pass filter (BPF), a duplexing filter, or a triplexing filter), a power amplifier (PA), a low noise amplifier (LNA), or a coupler.

In an embodiment, the LB L-PAMiD 608 may be configured to process an RF signal or an IF signal in a frequency band lower than 1 GHz within the frequency range of the legacy communication technology or the first frequency range. In an embodiment, the OMH L-PAMiD 606 and/or the MHB L-PAMiD 618 may be configured to process an RF signal in a middle frequency band (for example, 1.4 GHz to 2.2 GHz) and/or a high frequency band (for example, 2.3 GHz to 2.7 GHz) within the frequency range of the legacy communication technology, the first frequency range, or the 6G frequency range or an IF signal (for example, 6G IF1 and/or 6G IF2). In an embodiment, the OMH L-PAMiD 606 and/or the MHB L-PAMiD 618 may handle a main path of SA of the 2G, the 3G, and the 4G, and 4G CA.

In an embodiment, the 5G IFIC 612 may be configured to process middle frequency conversion for the RF signal in the second frequency range (for example, lower than 24 GHz). Although not illustrated, in an embodiment, the 5G IFIC 612 may include the transceiver 900 of FIG. 9 in order to generate or process IF signals in a predetermined frequency band (for example, 10 MHz) corresponding to the second frequency range (for example, lower than 24 GHz), but is not limited thereto.

In an embodiment, the 5G IFIC 612 may receive a baseband signal generated by the communication processor 602 and perform frequency up conversion of the baseband signal into an IF signal in a middle frequency band (for example, IF1 (=500 MHz) or IF2 (=10 GHz)) corresponding to the second frequency range by using a predetermined reference frequency (for example, 500 MHz). The IF signal may be transferred to the mmW module 620 through one or more lines within the first FPCB 626. The first FPCB 626 may include a first line that transmits an IF signal (for example, IF1) and/or a reference signal (for example, REF) and a second line that transmits an IF signal (for example, IF2).

In an embodiment, the 5G IFIC 612 may receive an IF signal in a middle frequency band (for example, IF1 (=500 MHz) or IF2 (=10 GHz)) corresponding to the second frequency range from the mmW module 620 through the first FPCB 626 and perform frequency down conversion of the IF signal (for example, IF2) into a baseband signal by using a predetermined reference frequency (for example, 500 MHz). The IF signal may be transferred to the 5G IFIC 612 of the first PBA 610 from the mmW module 620 through one or more lines within the first FPCB 626. The baseband signal output from the 5G IFIC 612 may be demodulated and decoded by the communication processor 602 after transferred to the communication processor 602.

The mmW module 620 may include the 5G RFIC 622 configured to process RF signals in the second frequency range. Although not illustrated, in an embodiment, the 5G RFIC 622 may include the transceiver 900 of FIG. 9 in order to generate or process RF signals in a predetermined frequency band corresponding to the second frequency range, but is not limited thereto.

In an embodiment, the 5G RFIC 622 may be configured to receive an IF signal in a middle frequency band (for example, IF1 (=500 MHz) or IF2 (=10 GHz)) corresponding to the second frequency band from the 5G IFIC 610 through the first FPCB 626 and perform frequency up conversion of the IF signal into an RF signal in a predetermined frequency band (for example, a transmission frequency band higher than 24 GHz, for example, 28 GHz to 39 GHz) within the second frequency range. The 5G RFIC 622 may radiate the RF signal to the air through the first antenna array 624 including one or more antenna elements. In an embodiment, the 5G RFIC 622 may receive an RF signal in a predetermined frequency band (for example, a reception frequency band higher than 24 GHz, for example, 28 GHz to 39 GHz) within the second frequency range through the first antenna array 627 and perform frequency down conversion of the RF signal into an IF signal in a middle frequency band (for example, IF1 (=500 MHz) or IF2 (=10 GHz)) corresponding to the second frequency range. The IF signal may be transferred to the 5G IFIC 612 of the first PBA 610 through the first FPCB 626.

The second PBA 630 may receive an RF signal in a predetermined transmission frequency band within the frequency range of the legacy communication technology or the first frequency range or an IF signal in a middle frequency band corresponding to the 6G frequency range from the first PBA 610 through the second FPCB 616. In an embodiment, the second PBA 630 may include an MHB LFEM 634, one or more antenna elements 634a, a 6G RFIC 632, a second antenna array 632a, and a switching part (for example, switches 636a, 636b, 638a, and 638b). In an embodiment, the antenna elements 634a may include two antenna elements (for example, antenna 1 and antenna 2) used for both transmission and reception and two antenna elements (for example, antenna 3 and antenna 4) used for only reception.

In an embodiment, the second FPCB 616 connecting the first PBA 610 and the second PBA 630 may include at least one of a first line that connects an RF/IF signal (for example, 1.4 GHz to 2.7 GHz) from the OMH L-PAMiD 606 to antenna 2, a second line that connects an RF/IF signal (for example, lower than 2.7 GHz) from the OMH L-PAMiD 206 or the LB L-PAMiD 208 to antenna 1 through the DPX 214, or a third line that connects an RF/IF signal (for example, lower than 6 GHz) from the transceiver 204 to the MHB LFEM 634. In an embodiment, at least one of the first line, the second line, and the third line may include one or more signal lines. In an embodiment, the second FPCB 616 may include one or more signal lines configured to transport RF signals in legacy or 5G FR1 and/or one or more signal lines configured to transport 6G IF3/IF4 signals. In an embodiment, at least one of the signal lines included in the second FPCB 616 may be configured to transport RF signals in legacy or 5G FR1 and/or transport 6G IF3/IF4 signals.

In the legacy communication mode or the 5G FR1 communication mode, at least two switches (for example, the DPDT 636a and the DPDT 636b) of the second PBA 630 may transfer an RF signal in a predetermined frequency band (for example, a transmission frequency band lower than 6 GHz) within the frequency range of the legacy communication technology or the first frequency range transmitted from the OMH L-PAMiD 606 or the LB L-PAMiD 608 of the first PBA 610 through the second FPCB 616 to antenna 1 and/or antenna 2 in the antenna elements 634. In the legacy communication mode or the 5G FR1 communication mode, at least two switches (for example, the DPDT 636a and the DPDT 636b) of the second PBA 630 may transfer an RF signal in a predetermined frequency band (for example, a reception frequency band lower than 6 GHz) within the frequency range of the legacy communication technology or the first frequency range received by antenna 1 and/or antenna 2 in the antenna elements 634 to the OMH L-PAMiD 606 and/or the LB L-PAMiD 608 of the first PBA 610 through the second FPCB 616.

Before transferring an RF signal in a predetermined frequency band (for example, a reception frequency band lower than 6 GHz) within the frequency range of the legacy communication technology or the first frequency range received by antenna 3 and/or antenna 4 in the antenna elements 634 to the transceiver 604 of the first PBA 610 through the second FPCB 616 in the legacy communication mode or the 5G FR1 communication mode, the MHB LFEM 634 may amplify and filter the RF signal. In an embodiment, the MHB LFEM 634 may include at least one of an LNA, a SAW filter, or an (antenna) switch module without a power amplifier (PA) or a coupler. In an embodiment, the RF signal output from the MHB LFEM 634 may be transferred to the transceiver 604 without passing through an amplifier (for example, the OMH L-PAMiD 608 or the LB L-PAMiD 608) after transferred to the first PBA 610 via the second FPCB 616.

In an embodiment, the MHB LFEM 634 may be connected to antenna 3 and antenna 4 in the antenna elements 634 through at least two switches (for example, S/DPDT 638a and S/DPDT 638b). The S/DPDT 638a and the S/DPDT 638b may be configured to connect antenna 3 and antenna 4 to the MHB LFEM 634 in the legacy communication mode and the 5G communication mode and connect antenna 3 and antenna 4 to the 6G RFIC 632 in the 6G communication mode.

The DPDT 636a and the DPDT 636b may be configured to connect antenna 1 and antenna 2 to the first PBA 610 in the legacy communication mode and the 5G communication mode and connect antenna 1 and antenna 2 to the 6G RFIC 632 in the 6G communication mode.

In the 6G communication mode, at least two switches (for example, the DPDT 636a and the DPDT 636b) may transfer, to the 6G RFIC 632, IF signals (for example, 6G IF1 and/or 6G IF2) corresponding to the 6G frequency range transmitted from the OMH L-PAMiD 606 or the LB L-PAMiD 608 of the first PBA 610 through the second FPCB 616. The 6G RFIC 632 may be configured to process RF signals corresponding to the 6G frequency range, based on the IF signal. Although not illustrated, in an embodiment, the 6G RFIC 632 may include the transceiver 900 of FIG. 9 in order to generate or process RF Signals in a predetermined frequency band corresponding to the 6G frequency range, but is not limited thereto.

In an embodiment, the 6G RFIC 632 may be configured to receive an IF signal in a middle frequency band (for example, 600 MHz to 6 GHz) corresponding to the 6G frequency range transmitted by the DPDT 636a and/or the DPDT 636b and perform frequency up conversion of the IF signal into an RF signal in a predetermined frequency band (for example, 13 GHz) within the 6G frequency range. The 6G RFIC 632 may radiate the RF signal to the air through the second antenna array 632a including one or more antenna elements. In an embodiment, the 6G RFIC 632 may receive an RF signal in a predetermined frequency band (for example, 13 GHz) within the 6G frequency range through the second antenna array 632a and perform frequency down conversion of the RF signal into an IF signal in a middle frequency band (for example, 600 MHz to 6 GHz) corresponding to the 6G frequency range. The IF signal may be switched by the DPDT 636a and/or the DPDT 636b and then transferred to the transceiver 604 of the first PBA 610 through the second FPCB 616.

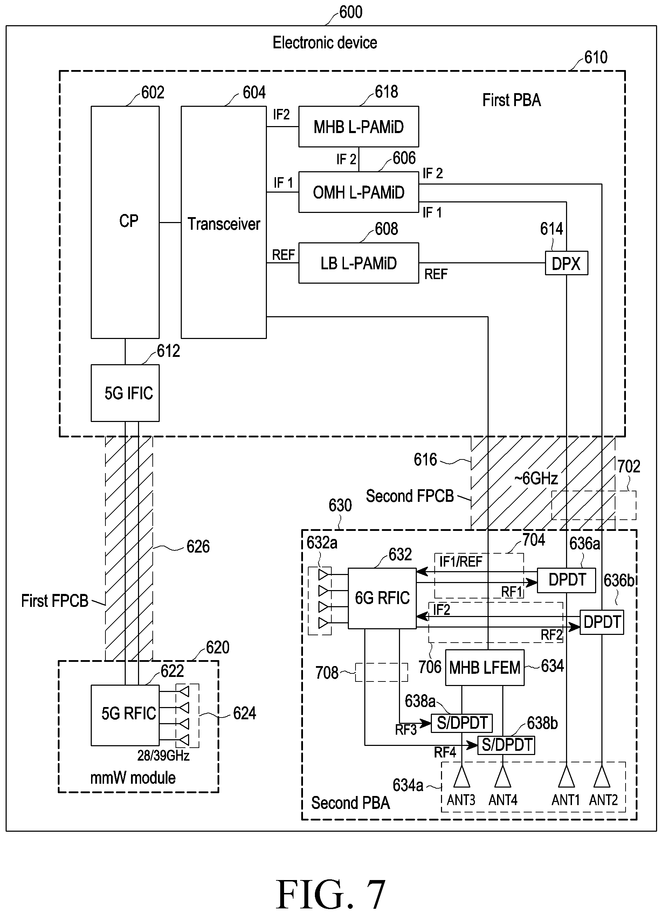

FIG. 7 is a diagram illustrating a 6G signal transmission path according to an embodiment of the disclosure. Although a path along which a 6G signal is transmitted based on the configuration of the circuits in FIG. 6 is described, embodiments of the disclosure are not limited thereto. In an embodiment, in the legacy communication mode and the 5G communication mode, the communication processor 602, the transceiver 604, the OMH L-PAMiD 606, the LB L-PAMiD 608, the diplexer (DPX) 614, and the 5G IFIC 612 may operate to be similar to the communication processor 202, the transceiver 204, the OMH L-PAMiD 206, the LB L-PAMiD 208, the diplexer (DPX) 214, and the 5G IFIC 212 of FIG. 2.

Referring to FIG. 7, the transceiver 604, the MHB L-PAMiD 618, the OMH L-PAMiD 606, and the LB L-PAMiD 908 configured to support the RF corresponding to the legacy and/or the first frequency range and the IF (for example, 600 MHz to 60 GHz) corresponding to the 6G frequency range may be connected to the second PBA 630 through at least one line 702 that connects the OMH L-PAMiD 606 and the LB L-PAMiD 608 with the second PBA 630 among a plurality of lines within the second FPCB 616. The at least one line 702 may be connected to switches (for example, the DPDT 636a and the DPDT 636b). In a transmission mode, the MHB L-PAMiD 618, the OMH L-PAMiD 606, and the LB L-PAMiD 608 may operate as power amplifiers.

In communication modes (for example, the legacy communication mode or the 5G FR1 communication mode) other than the 6G communication mode, the DPDT 636a and the DPDT 636b may connect at least one line 702 of the second FPCB 616 to antenna 1 and antenna 2. In the 6G communication mode, the DPDT 636a and the DPDT 636b may transfer IF signals (for example, 6G IF1 and 6G IF2) corresponding to the 5G frequency band received through at least one line 702 of the second FPCB 616 to the 6G RFIC 632 through RF wiring 704 and 706 between the DPDT 636a and the DPDT 636b, and the 6G RFIC 632.

In an embodiment, the DPDT 636a may receive an IF signal (for example, 6G IF1) corresponding to the 6G frequency band generated by the OMH L-PAMiD 606 and transmitted via the DPX 614 and/or a reference signal (for example, REF) generated by the LB L-PAMiD 608 and transmitted via the DPX 614 through the second FPCB 616, and transfer the 6G IF1 signal and/or the REF signal to the 6G RFIC 632 through RF wiring 704 between the DPDT 636a and the 6G RFIC 632. The 6G RFIC 632 may convert the 6G IF1 signal into the RF signal (for example, 6G RF1) in the 6G frequency band by using the REF signal, and then radiate the 6G RF1 signal to the air through the second antenna array 632 or transfer the 6G RF1 signal to the DPDT 636a through the RF wiring 704. The DPDT 636a may transfer the 6G RF1 signal to antenna 1 and allow antenna 1 to radiate the 6G RF1 signal to the air.

In an embodiment, the IF Signal (for example, 6G IF2) corresponding to the 6G frequency band generated by the MHB L-PAMiD 618 may be output from the first PBA 610 via the OMH L-PAMiD 606. The DPDT 636b may receive the 6G IF2 signal through the second FPCB 616 and transfer the 6G IF2 signal to the 6G RFIC 632 through the RF wiring 706 between the DPDT 636b and the 6G RFIC 632. The 6G RFIC 632 may convert the 6G IF2 signal into the RF signal (for example, 6G RF3) in the 6G frequency, and then radiate the 6G RF2 signal to the air through the second antenna array 632a or transfer the 6G RF3 signal to the DPDT 636b through the RF wiring 706. The DPDT 636b may transfer the 6G RF2 signal to antenna 2 and allow antenna 2 to radiate the 6G RF2 signal to the air.

In an embodiment, the 6G RFIC 632 may convert the 6G IF1 signal and/or the 6G IF2 signal into at least one RF Signal (for example, 6G RF3 and/or 6G RF4) in the 6G frequency band. In the 6G communication mode, the 6G RF3 signal and/or the 6G RF4 signal may be transferred to the S/DPDT 638a and/or the S/DPDT 638b through RF wiring 708 between the 6G RFIC 632, and the S/DPDT 638a and/or the S/DPDT 638b and/or transferred to antenna 3 and/or antenna 4 y the S/DPDT 638a and/or the S/DPDT 638b. The 6G RFIC 632 may support transmission MIMO by using one or more antennas (for example, a maximum of 4 antennas) in the antenna elements 634a through switches (for example, the DPDT 636a, the DPDT 636b, the S/DPDT 638a, and/or the S/DPDT 638b).

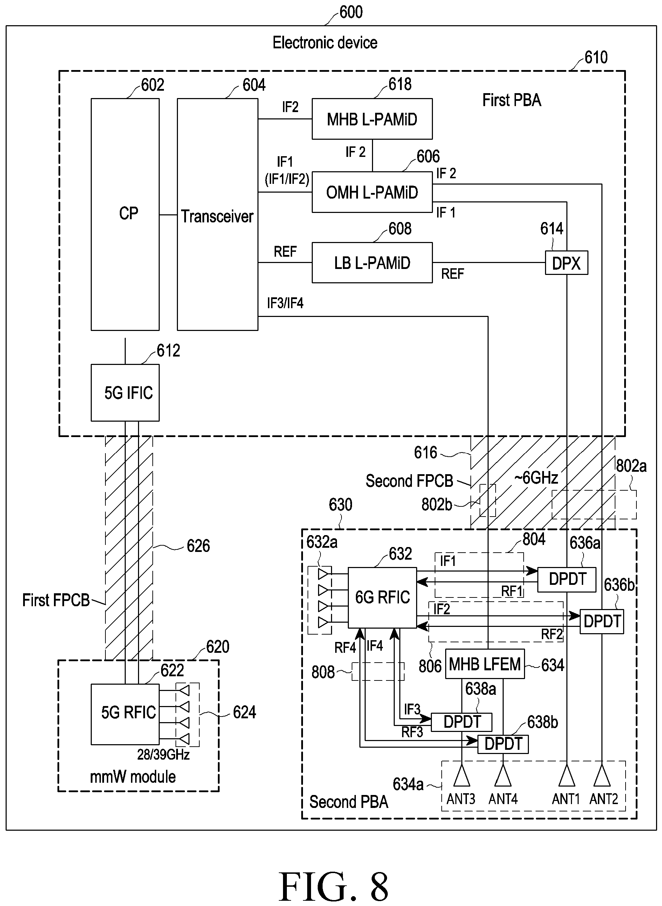

FIG. 8 is a diagram illustrating a 6G signal reception path according to an embodiment of the disclosure. Although a path along which a 6G signal is received based on the configuration of the circuits in FIG. 6 is illustrated, embodiments of the disclosure are not limited thereto. In an embodiment, in the legacy communication mode and the 5G communication mode, the communication processor 602, the transceiver 604, the OMH L-PAMiD 606, the LB L-PAMiD 608, the diplexer (DPX) 614, and the 5G IFIC 612 may operate to be similar to the communication processor 202, the transceiver 204, the OMH L-PAMiD 206, the LB L-PAMiD 208, the diplexer (DPX) 214, and the 5G IFIC 212 of FIG. 2.

Referring to FIG. 8, for a downlink (DL) (for example, RF reception), the electronic device 600 may support the larger number of MIMO layers compared to an uplink (UL) (for example, RF transmission). The electronic device 600 may use RF wiring (for example, RF wiring 802a and 802b) for legacy/FR1) to expand RF wiring connected to the first PBA 610.

The transceiver 604, the MHB L-PAMiD 618, the OMH L-PAMiD 606, and the LB L-PAMiD 608 configured to support the RF corresponding to the first frequency range and the IF corresponding to the 6G frequency range may be connected to the second PBA 630 through one or more lines (for example, lines 802a and 802b) that connect the OMH L-PAMiD 606 and the LB L-PAMiD 608 with the second PBA 630 among a plurality of lines within the second FPCB 616. Lines from the second FPCB 616 may be connected to switches (for example, the DPDT 636a and the DPDT 636b). In a reception mode, the MHB L-PAMiD 618, the OMH L-PAMiD 606, and the LB L-PAMiD 608 may operate as low noise amplifiers.

In communication modes (for example, the legacy communication mode or the 5G FR1 communication mode) other than the 6G communication mode, the DPDT 636a and the DPDT 636b may connect antenna 1 and antenna 2 to at least one line 802a of the second FPCB 616. In the 6G communication mode, the DPDT 636a and the DPDT 636b may transfer RF signals (for example, 6G RF1 and 6G RF2) corresponding to the 6G frequency band received through antenna 1 and antenna 2 to the 6G RFIC 632 through RF wiring 804 and 806 between the DPDT 636a and the DPDT 636b, and the 6G RFIC 632.

In an embodiment, the DPDT 636a may transfer the 6G RF1 signal received by antenna 1 to the 6G RFIC 632 through the RF wiring 804 between the DPDT 636a and the 6G RFIC 632. After converting the 6G RF1 signal into an IF signal (for example, 6G IF 1) corresponding to the 6G frequency band by using the pre-stored REF signal, the 6G RFIC 632 may transfer the 6G IF1 signal to the DPDT 636a through the RF wiring 804. The DPDT 636a may transfer the 6G IF1 signal to the DPX 614 of the first PBA 610 through the second FPCB 616 (for example, the line 802a). The 6G IF1 signal may be transferred to the OMH L-PAMiD 606 via the DPX 614 and then transferred to the transceiver 604 via the OMH L-PAMiD 606. The transceiver 604 may convert the 6G IF1 signal into a baseband signal and transfer the baseband signal to the communication processor 602.

In an embodiment, the DPDT 636b may transfer the 6G RF2 signal received by antenna 2 to the 6G RFIC 632 through the RF wiring 806 between the DPDT 636b and the 6G RFIC 632. After converting the 6G RF2 signal into an IF signal (for example, 6G IF2) corresponding to the 6G frequency band by using the pre-stored REF signal, the 6G RFIC 632 may transfer the 6G IF3 signal to the DPDT 663b through the RF wiring 806. The DPDT 636b may transfer the 6G IF2 signal to the OMH L-PAMiD 606 of the first PBA 610 through the second FPCB 616 (for example, the line 802a). The 6G IF2 signal may be transferred to the MHB L-PAMiD 618 via the OMH L-PAMiD 606 and then transferred to the transceiver 604 via the OMH L-PAMiD 618. The transceiver 604 may convert the 6G IF2 signal into a baseband signal and transfer the baseband signal to the communication processor 602.

The OMH L-PAMiD 606 may amplify and process the 6G IF1 signal received from the second PBA 630 through the DPX 614 and directly transfer the 6G IF1 signal to the transceiver 604, and transfer the 6G IF2 signal received from the second PBA 630 without passing through the DPX 614 to the MHB L-PAMiD 618. The MHB L-PAMiD 618 may amplify and process the 6G IF2 signal and transfer the 6G IF2 signal to the transceiver 604.

In an embodiment, the 6G RFIC 632 may further receive additional RF Signals corresponding to the 6G frequency band through the second antenna array 632a and/or antenna 3 and antenna 4 as well as the 6G RF1 signal and the 6G RF2 signal received through antenna 1 and antenna 2 in the antenna elements 634a.

In an embodiment, the 6G RFIC 632 may acquire a 6G RF3 signal and/or a 6G RF4 signal received by antenna 3 and/or antenna 4 through the S/DPDT 638a and/or the S/DPDT 638b. In the 6G communication mode, the S/DPDT 638a and/or the S/DPDT 638b may transfer RF signals (for example, the 6G RF3 signal and/or the 6G RF4 signal) in the 6G frequency band received by antenna 3 and/or antenna 4 in the antenna elements 634a to the 6G RFIC 632 through RF wiring 808 between the 6G RFIC 632, and the S/DPDT 638a and/or the S/DPDT 638b.

After converting the 6G RF3 signal and the 6G RF4 signal into the IF signal (for example, 6G IF3 and 6G IF4) corresponding to the 6G frequency band by using the pre-stored REF signal, the 6G RFIC 632 may transfer the 6G IF3 signal and the 6G IF4 signal to the S/DPDT 638a and the S/DPDT 638b through the RF wiring 808. The S/DPDT 638a and the S/DPDT 638b may transfer the 6G IF3 signal and the 6G IF4 signal to the MHB LFEM 634. After processing (for example, low noise amplifying) the 6G IF3 signal and the 6G IF4 signal, the MHB LFEM 634 may transfer the 6G IF3 signal and the 6G IF4 signal to the transceiver 604 of the first PBA 610 through the second FPCB 616 (for example, the line 802b). The transceiver 604 may convert the 6G IF3 signal and the 6G IF4 signal into baseband signals and transfer the baseband signals to the communication processor 602.

The 6G RFIC 632 may not only receive the 6G RF signals from one or more (for example, a maximum of 4) antennas in the antenna elements 634a through switches (for example, the DPDT 636a, the DPDT 636b, the S/DPDT 638a, and/or the S/DPDT 638b) but also receive the 6G RF signals by using the second antenna array 632a. Accordingly, the 6G RFIC 632 may process the 6G RF signals corresponding to a maximum of 8 layers.

FIG. 9 is a diagram illustrating the structure of a transceiver according to an embodiment of the disclosure. The structure of the illustrated transceiver 900 may be included in one of the transceiver 604, the 5G IFIC 612, the 5G RFIC 622, or the 6G RFIC 632 according to embodiments.

Referring to FIG. 9, the transceiver 900 may include at least one of a mixer 904, a BPF 906, a PA 908, a duplexer 910, an LNA 912, a BPF 914, or a frequency synthesizer 920.

In a transmission mode, the mixer 904 may have a transmission signal 902 from the communication processor 602 or another transceiver (not shown) as an input and mix (for example, frequency up conversion) a reference signal generated by the frequency synthesizer 920 with the transmission signal 902. The BPF 906 may filter an output signal of the mixer 904 according to a predetermined transmission frequency band. The PA 908 may amplify the output signal of the BPF 906. The duplexer 910 may output the output signal of the PA 908 through an input/output terminal 924. For example, the input/output terminal 924 may be connected to a transmission/reception antenna (for example, at least one of the first antenna array 624, the second antenna array 632a, or the antenna elements 634b) or connected to another transceiver.

In a reception mode, the duplexer 910 may transfer a signal input through the input/output terminal 924 (for example, a signal received by at least one of the first antenna array 624, the second antenna array 632a, or the antenna elements 634b or an output signal of another transceiver (not shown) to the LNA 912. The LNA 912 may amplify the output signal of the duplexer 910. The BPF 914 may filter the output signal of the LNA 912 according to a predetermined reception frequency band. The mixer 916 may mix (for example, frequency down conversion) the output signal of the BPF 914 with a reference signal generated by the synthesizer 920. The mixer 916 may output a mixing result reception signal 918.

The electronic device (for example, the electronic device 500 or 600) according to embodiments of the disclosure does not include a separate 6G IFIC (for example, the 6G IFIC 418), thereby saving a material cost and reducing a circuit space. The electronic device (for example, the electronic device 500 or 600) according to embodiments of the disclosure shares the RF configuration of legacy/FR1 (for example, at least one of the transceiver 604, the OMH L-PAMiD 606, the LB L-PAMiD 608, or the second FPCB 616) and the antenna (for example, the antenna elements 634a), thereby reducing an amount of RF wiring added to support the 6G. Since the electronic device (for example, the electronic device 500 or 600) according to embodiments of the disclosure has small hardware dependency for 6G communication, the electronic device can be flexibly developed to support or not support the 6G communication.

The electronic device 500 according to an embodiment of the disclosure may include a first circuit 510 including a processor 512, and a first transceiver 516 connected to the processor and configured to process a radio frequency (RF) corresponding to a first radio access technology (RAT), and/or a first frequency range (FR1) of a second RAT, and to process an intermediate frequency (IF) corresponding to a third RAT. The electronic device may include a second circuit including a first switching part 534 connected to the first transceiver through a second connection part 538, and a second transceiver 532 configured to process a RF corresponding to the third RAT and connected to a second antenna array 536b, the first switching part 534 being configured to connect the first transceiver with antenna elements 536a and/or the second transceiver.

In an embodiment, the second transceiver may be mounted close to the second antenna array.

In an embodiment, the first switching part may include at least one double pole, double throw (DPDT) switch configured to transfer IF signals corresponding to the third RAT output from the first circuit to the second transceiver, and transfer RF signals of the third RAT output from the second transceiver to at least one first antenna element of the antenna elements, in a transmission mode of the third RAT.

In an embodiment, the at least one DPDT switch may be configured to, in a transmission mode of the first RAT or the second RAT, transfer RF signals of the first RAT or the second RAT output from the first circuit to the at least one first antenna element.

In an embodiment, the second circuit may include a second switching part configured to transfer second RF signals of the third RAT output from the second transceiver to at least one second antenna element among the antenna elements, in a transmission mode of the third RAT.

In an embodiment, the second switching part may be configured to, in a transmission mode of the first RAT or the second RAT, transfer RF signals of the first RAT or the second RAT output from the first circuit to the at least one first antenna element.

In an embodiment, at least one DPDT switch may be configured to, in a reception mode of the third RAT, transfer third RF signals of the third RAT received by the at least one first antenna element to the second transceiver, and transfer IF signals corresponding to the third RAT output from the second transceiver to the first circuit through the second connection part.

In an embodiment, the second circuit may further include a low noise amplifier (LNA) front end module (LFEM) connected to the first transceiver of the first circuit through the second connection part. In an embodiment, the second switching part may be configured to, in a reception mode of the third RAT, transfer RF signals of the third RAT received by the at least one second antenna element to the second transceiver, and transfer IF signals corresponding to the third RAT output from the second transceiver to the LFEM.

In an embodiment, the second switching part may be configured to, in a reception mode of the first RAT or the second RAT, transfer RF signals of the first RAT or the second RAT received by the at least one second antenna element to the LFEM.

In an embodiment, the first RAT may include at least one of 2G, 3G, or 4G radio communication technology. The second RAT may include 5G radio communication technology using the FR1 and/or a second frequency range (FR2). The third RAT may include 6G radio communication technology. The IF corresponding to the third RAT is included in a RF band of the first RAT or the second RAT.

In an embodiment, the first circuit may include at least one of a first amplifier 618 connected to the first transceiver, a second amplifier 606 connected to the first transceiver and the first amplifier module, a third amplifier 608 connected to the first transceiver, or a diplexer 614 connected the second amplifier and the third amplifier to the second connection part.

In an embodiment, the first amplifier may be configured to amplify RF signals corresponding to the first RAT or the FR1 of the second RAT and IF signals corresponding to the third RAT, the second amplifier may be configured to amplify RF signals corresponding to the first RAT or the FR1 of the second RAT and IF signals corresponding to the third RAT, and the third amplifier may be configured to generate the RF signals corresponding to the first RAT or the FR1 of the second RAT and a reference frequency signal for IF conversion of the third RAT.

In an embodiment, at least one of the first amplifier, the second amplifier, or the third amplifier may be configured to operate as a power amplifier (PA) in a transmission mode and as a low noise amplifier (LNA) in a reception mode

In an embodiment, at least one of the antenna elements or the second antenna array may be included in the second circuit or mounted on a housing of the electronic device.

In an embodiment, the second connection part may include one or more signal lines configured to carry RF signals corresponding to the first RAT or the FR1 of the second RAT and/or IF signals corresponding to the third RAT.

In an embodiment, the second transceiver may be configured to support multiple layers for multiple input multiple output (MIMO) using one or more antennas of the antenna elements and the second antenna array.

In an embodiment, the first circuit may include a third transceiver (514) connected to the processor and configured to process an intermediate frequency (IF) corresponding to a second frequency range (FR2) of the second RAT. In an embodiment, the electronic device may further include a third circuit 520 including a fourth transceiver 522 connected to the third transceiver through a first connection part 526 and configured to process a RF corresponding to the FR2 of the second RAT.

In an embodiment, the first transceiver, or the second transceiver may include at least one of a frequency synthesizer 920, a first mixer 904 configured to receive a transmission signal and connected to the frequency synthesizer, a first band pass filter (BPF) 906 connected to the first mixer, a power amplifier (PA) 908 connected to the first BPF, a duplexer 910 connected to the PA, a low noise amplifier (LNA) 912 connected to the duplexer, a second BPF 914 connected to the LNA, or a second mixer 916 connected to the second BPF and the frequency synthesizer and to output a received signal.

In an embodiment, a method of operating an electronic device 600 may include an operation of controlling a first transceiver 604 to process radio frequency (RF) signals corresponding to a first radio access technology (RAT) and/or a first frequency range (FR1) of a second RAT in a first communication mode using the first RAT and/or the FR1 of the second RAT, and to process intermediate frequency (IF) signals corresponding to a third RAT in a second communication mode using the third RAT. The method may include an operation of controlling a first switching part 636a and 636b to connect at least one first antenna element among antenna elements 634a to the first transceiver in the first communication mode and connect the at least one first antenna element to a second transceiver 632 in the second communication mode.

In an embodiment, the method may include an operation of controlling a second switching part 638a and 638b to connect at least one second antenna element among the antenna elements to a low noise amplifier (LNA) front end module (LFEM) 634 in the first communication mode and connect the at least one second antenna element to the second transceiver in the second communication mode.

In an embodiment, the first transceiver may be configured to convert first baseband signals generated by a communication processor into the RF signals corresponding to the first RAT and the FR1 of the second RAT or convert the RF signals corresponding to the FR1 of the first RAT and the second RAT into second baseband signals in the first communication mode, and output the converted RF signals or the converted second baseband signals to the communication processor and convert third baseband signals generated by the communication processor into IF signals corresponding to the third RAT or convert the IF signals corresponding to the third RAT into fourth baseband signals in the second communication mode, and output the converted IF signals or the converted fourth baseband signals to the communication processor.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (500) comprising:
a first circuit (510) comprising a processor (512), and a first transceiver (516) connected to the processor and configured to process a radio frequency (RF) corresponding to a first radio access technology (RAT) and/or a first frequency range (FR1) of a second RAT, and to process an intermediate frequency (IF) corresponding to a third RAT; and
a second circuit (530) comprising a first switching part (534) connected to the first transceiver (516) through a second connection part (538), and a second transceiver (532) configured to process a RF corresponding to the third RAT and connected to a second antenna array (536b), the first switching part being configured to connect the first transceiver with antenna elements (536a) and/or the second transceiver (532).

2. The electronic device of claim 1, wherein the first switching part comprises at least one double pole double throw (DPDT) switch configured to transfer IF signals corresponding to the third RAT output from the first circuit to the second transceiver (532), and transfer RF signals of the third RAT output from the second transceiver (532) to at least one first antenna element of the antenna elements (536a), in a transmission mode of the third RAT.

3. The electronic device of claim 2, wherein the at least one DPDT switch is configured to:
in a transmission mode of the first RAT or the second RAT, transfer RF signals of the first RAT or the second RAT output from the first circuit to the at least one first antenna element.

4. The electronic device of any one of claims 1 to 3, wherein the second circuit comprises:
a second switching part configured to transfer second RF signals of the third RAT output from the second transceiver to at least one second antenna element among the antenna elements, in a transmission mode of the third RAT, and
wherein the second switching part is configured to,
in a transmission mode of the first RAT or the second RAT, transfer RF signals of the first RAT or the second RAT output from the first circuit to the at least one second antenna element.

5. The electronic device of any one of claims 2 to 4, wherein the at least one DPDT switch is configured to,
in a reception mode of the third RAT, transfer third RF signals of the third RAT received by the at least one first antenna element to the second transceiver, and transfer IF signals corresponding to the third RAT output from the second transceiver to the first circuit through the second connection part.

6. The electronic device of claim 4 or 5, wherein the second circuit (530) comprises a low noise amplifier (LNA) front end module (LFEM) connected to the first transceiver of the first circuit through the second connection part, and
wherein the second switching part configured to, in a reception mode of the third RAT, transfer RF signals of the third RAT received by the at least one second antenna element to the second transceiver, and transfer IF signals corresponding to the third RAT output from the second transceiver to the LFEM.

7. The electronic device of claim 6, wherein the second switching part is configured to:
in a reception mode of the first RAT or the second RAT, transfer RF signals of the first RAT or the second RAT received by the at least one second antenna element to the LFEM.

8. The electronic device of any one of claims 1 to 7, wherein the first RAT includes at least one of 2G, 3G, or 4G radio communication technology,
the second RAT includes 5G radio communication technology using the FR1 and/or a second frequency range (FR2),
the third RAT includes 6G radio communication technology, and
the IF corresponding to the third RAT is included in a RF band of the first RAT or the second RAT.

9. The electronic device of any one of claim 1 to 8, wherein at least one of the antenna elements or the second antenna array is included in the second circuit or mounted on a housing of the electronic device.

10. The electronic device of any one of claims 1 to 9, wherein the second connection part comprises one or more signal lines configured to carry RF signals corresponding to the first RAT or the FR1 of the second RAT and/or IF signals corresponding to the third RAT.

11. The electronic device of any one of claims 1 to 10, wherein the second transceiver is configured to support multiple layers for multiple input multiple output (MIMO) using one or more antennas of the antenna elements and the second antenna array.

12. The electronic device of any one of claim 1 to 11, wherein the first circuit comprises a third transceiver (514) connected to the processor, and configured to process an IF corresponding to a FR2 of the second RAT, and
wherein the electronic device comprises a third circuit (520) comprising a fourth transceiver (522) connected to the third transceiver through a first connection part (526) and configured to process a RF corresponding to the FR2 of the second RAT.

13. A method of operating an electronic device (600), the method comprising:
controlling a first transceiver (604) to process radio frequency (RF) signals corresponding to a first radio access technology (RAT) and/or a first frequency range (FR1) of a second RAT in a first communication mode using the first RAT and/or the FR1 of the second RAT, and to process intermediate frequency (IF) signals corresponding to a third RAT in a second communication mode using the third RAT; and
controlling a first switching part (636a, 636b) to connect at least one first antenna element among antenna elements (634a) to the first transceiver in the first communication mode and connect the at least one first antenna element to a second transceiver (632) in the second communication mode.

14. The method of claim 13, comprising controlling a second switching part (638a, 638b) to connect at least one second antenna element among the antenna elements to a low noise amplifier (LNA) front end module (LFEM) (634) in the first communication mode and connect the at least one second antenna element to the second transceiver in the second communication mode.

15. The method of claim 13 or 14, wherein the first transceiver is configured to:
convert first baseband signals generated by a communication processor into the RF signals corresponding to the first RAT and the FR1 of the second RAT or convert the RF signals corresponding to the FR1 of the first RAT and the second RAT into second baseband signals in the first communication mode, and output the converted RF signals or the converted second baseband signals to the communication processor; and
convert third baseband signals generated by the communication processor into IF signals corresponding to the third RAT or convert the IF signals corresponding to the third RAT into fourth baseband signals in the second communication mode, and output the converted IF signals or the converted fourth baseband signals to the communication processor.
